# EUROPEAN PATENT APPLICATION

(11) **EP 4 835 512 A1**
(43) Date of publication of application: **04.11.2026**
(21) Application number: 25173348.1
(22) Date of filing: 29.04.2025
(51) Int. Cl.: G01S 7/00, G01S 13/86, G01S 13/931, G01S 15/931

(54) **AUTONOMOUS WIRELESS PARKING AND BLIND SPOT ASSISTANCE SYSTEM**

(71) Applicant: Autonomous safety systems UAB, 02300 Vilnius (LT)
(72) Inventor: Rimkus, Renaldas, Vilnius (LT)
(74) Representative: AAA Law

(57) **Abstract**

Autonomous wireless parking and blind spot assistance system comprising at least two distance sensors each comprising a casing hermetically enclosing an ultrasonic sensor for parking use, and/or a millimetre-wave radar for blind spot monitoring use, components of long range communication protocol networks for sending signals to a communication module, a rechargeable power source and magnets for stationary mount, and a communication module comprising long range communication protocol networks components for receiving signals from long range communication protocol networks components of the sensors, a short-range wireless technology components for exchanging data between fixed and mobile devices over short distances.

## Description

### TECHNICAL FIELD

The present invention relates to autonomous, wireless parking and blind spot assistance systems.

### BACKGROUND ART

Towing a trailer introduces significant operational challenges compared to driving a standard vehicle. The presence of multiple blind spots, combined with restricted manoeuvrability and increased response time, makes both parking and on-road navigation substantially more complex. These challenges are particularly critical in two key scenarios: precise parking manoeuvres and safe lane changes or turns while driving.

Trailer parking differs from conventional vehicle parking in two primary ways. First, it requires an in-depth understanding of trailer axle dynamics and their response to steering inputs-knowledge typically acquired through experience rather than intuitive vehicle handling. Second, visibility is considerably more restricted, making it difficult, if not impossible, to park larger trailers without external guidance. Unlike standard vehicles, where onboard sensors and cameras assist in manoeuvring, trailers lack a direct technological equivalent, complicating the process further.

The core challenge in trailer manoeuvring assistance lies in overcoming visibility limitations while maintaining practical and reliable operation. Also, another issue with current parking and driving assistance systems is their high energy consumption.

Implementing an effective solution presents several technical obstacles:
- Absence of a Wired Connection - Unlike standard vehicles, trailers do not feature an integrated wired network capable of supporting electronic sensors for obstacle detection. The lack of a dedicated communication interface between the towing vehicle and the trailer restricts the use of traditional wired assistance systems.
- Limitations of Wireless Technologies - While wireless solutions offer an alternative, they introduce additional constraints:
   o Restricted operational range, limiting their effectiveness to short distances.
   ∘ Signal interference and shielding issues, where materials used in trailer construction or cargo load composition may obstruct signal transmission, leading to inconsistent or unreliable sensor performance.
- Installation Constraints - The implementation of any assistance system typically requires some degree of installation, posing further challenges:
   ∘ Wired solutions rely on integration with the trailer's electrical circuit, a requirement that is often impractical due to design variations across different trailer models.
   ∘ Existing wireless systems still depend on trailer-mounted power sources, making them semi-wireless rather than fully independent, reducing installation flexibility.

Beyond practical concerns, these installation challenges also raise regulatory, technical, and safety considerations, as they may require modifications that are either legally restricted or demand specialized expertise beyond the capabilities of typical trailer users.

As a result, most existing solutions remain wired, yet trailers lack a dedicated wired infrastructure that could support advanced assistance technologies. Unlike standard vehicles, where sensors are permanently integrated and connected to an onboard system, trailers are independent units that are frequently detached, making a stable wired connection impractical. While trailers have electrical circuits for lighting, these are not designed for the continuous, high-speed data transfer required for ultrasonic sensors, radar, or video cameras. Installing a dedicated wired connection would require additional components, specialized connectors, and modifications, which may not be compatible across different trailer models. Frequent hitching and unhitching further complicate the situation, as any wired system would need to be reattached and recalibrated each time the trailer is connected. Additionally, exposed wiring on trailers is susceptible to wear, environmental damage, and corrosion, reducing long-term reliability.

Even if a wired system were installed, ensuring seamless real-time communication without latency or connection failures would remain a challenge. Consequently, fully wired solutions are impractical for trailers, pushing the market toward semi-wireless and fully wireless alternatives. However, these solutions also face significant drawbacks, including limited range, signal interference, and power dependency. With no effective alternative available, many trailer operators have resorted to simple warning stickers, such as the Angles Morts (Blind Spot) label, as a minimal safety measure. The real challenge lies in developing a wireless system that is not restricted by power consumption, signal interference, or installation complexity-one that offers a reliable, adaptable, and easy-to-use solution for parking and blind spot assistance.

Currently, there are three primary categories of trailer parking assistance systems available on the market. These solutions vary in their level of installation complexity, connectivity, and practicality for trailer users. Each has advantages and drawbacks depending on the user's needs and the type of trailer in use.

### Fully Wired Solutions.

Working Principle:
- A wired connection is installed between the towing vehicle and the trailer, enabling real-time data transfer from sensors.
- Typically integrates ultrasonic sensors, video cameras, or millimetre-wave radar to provide parking and manoeuvring assistance.

Advantages:
- Stable and reliable communication between sensors and the vehicle.
- No wireless interference issues, ensuring continuous operation.
- Can support high-bandwidth data transfer, making it ideal for video-based parking assistance.

Limitations:
- Complex installation, requiring both the vehicle and trailer to be wired together.
- Legal and technical restrictions may apply, as modifications to the vehicle-trailer wiring system could be restricted in some regions.
- Lack of flexibility, making it difficult to switch trailers without additional wiring.

### Semi-Wireless Solutions.

Working Principle:
- Wireless communication (such as Bluetooth or WiFi) is used to send signals between the trailer-mounted sensors and an indication screen in the vehicle.
- However, the sensors and/or the display unit still require a wired connection to the trailer's electrical circuit for power.

Advantages:
- Less wiring complexity compared to fully wired systems.
- More convenient installation, as only power wiring is needed.
- No physical tethering to the vehicle, allowing the system to work across multiple trailers.

Limitations:
- Still requires wiring for power, making it not fully independent.
- Wireless range limitations can affect real-time performance.
- Potential signal interference due to trailer materials or cargo, reducing reliability.

### Wireless Solutions

Working Principle:
- Completely independent system operating on battery power, eliminating the need for any wired connections.
- Uses Bluetooth, WiFi, or other short-range wireless networks to send sensor data to a display or smartphone application.

Advantages:
- No installation required beyond mounting the sensors, making it the easiest system to deploy.
- Completely wireless, meaning no dependence on trailer power.
- Portable and flexible, allowing the system to be used across different trailers without modifications.

Limitations:
- Limited operating range, as wireless signals can be disrupted by cargo, trailer materials, or distance.
- Battery life constraints, requiring periodic recharging or replacement.
- Potential delays or data loss due to signal interference, impacting reliability.

### Examples of prior art disclosing above discussed system types:

US patent application No.: 15/334,867 (publication No. US2017124881) discloses a system for detecting objects in a blind spot of a vehicle provides detectors and/or cameras mounted at or near the top of the vehicle and at or near a centre of each side of the vehicle. A camera or sensor may be provided at the top centre of each side of a semi-trailer to provide a down directed view at each side of the trailer. A sensor or camera may also be provided at the top centre of the back of the trailer and at or near the top of the trailer.

US patent No.: US11813985 discloses a collision avoidance assembly for reducing collisions with a semitrailer includes a rear and side facing alert modules, which are mountable to a semitrailer, and a control module, which is mountable in a cab of a semitruck engaged to the semitrailer. Each alert module comprises a sensor, a camera, and a speaker. The sensors detect and the cameras image an approaching vehicle. The speaker and the control module provide audible alerts to a driver of the approaching vehicle and an operator of the semitrailer, respectively, so as to facilitate collision avoidance.

US patent No.: US9937861 discloses a vehicle blind spot detection system, method, and module for adjusting parameters of a vehicle blind spot detection algorithm based on a trailer being attached to the back of the vehicle. More specifically, based on a determination that a trailer is attached to the vehicle and the reception of trailer information corresponding to the attached trailer, an adjust to the parameters of a blind spot detection area is disclosed for ensuring the continued operation of the blind spot detection feature will take into account the attached trailer.

US patent No.: US11827147 discloses a trailer manoeuvre assistance system and method provide for alerting a vehicle operator to possible obstacles within a predicted path of trailer. The predicted path is determined based on at least one sensor system mounted to the trailer and a determination that a detected obstacle is within the predicted path.

US patent No.: US11524537 discloses a vehicle, hitch, and articulating trailer include vehicle to vehicle and infrastructure communications and vehicle computing systems, which have a controller coupled to and/or including one or more of a dynamics measurement unit, a transceiver, and a position sensor, among other components. The controller(s) are configured to, in response to detecting positions of trailer corners from the position sensor, generate vehicle and trailer relative orientation and navigation data including location, velocity, and orientation, utilizing vehicle and trailer electronic polyhedrons articulating about a hitch point and representing the combination vehicle and trailer predicted path and envelopes. In response to detected trailer movement relative to the hitch point, the generated articulated polyhedrons are generated with the navigation data, which includes the location, speed, and orientation, which are in turn communicated to nearby vehicles and roadway infrastructure. Initial trailer vertices may be generated with wireless and mobile devices to generate the trailer polyhedron.

The present invention is dedicated to overcoming of the above shortcomings and for producing further advantages over prior art.

### BRIEF DESCRIPTION OF THE INVENTION

The present invention relates to a fully autonomous, wireless parking and blind spot assistance system for objects such as trailers, light vehicles, heavy-duty trucks, farming machinery, and other towable equipment. The system provides real-time obstacle detection and visibility enhancement without requiring a wired connection to the vehicle or the trailer's electrical system.

The system according to the invention comprises at least one but preferably at least two waterproof removably attachable distance sensors, each comprising a frame enclosing an ultrasonic sensor for parking assistance and/or a millimeter-wave radar for obstacle detection in blind spots of a vehicle, components of long-range communication protocol networks, a rechargeable power source. The sensor housing also comprises an attachment means, such as permanent magnets, for attaching the sensor frame to an object, such as a towable trailer, or a vehicle in general. The attachment means optionally comprises a holder for attaching to an object, such as a towable trailer, or a vehicle in general, to which the sensor frame may be attached.

The system further comprises a communication module comprising components of long-range communication protocol networks for receiving signals from the components of long-range communication protocol networks of the sensors and short-range wireless technology components for exchanging data between fixed and mobile devices over short distances.

The sensors send surrounding obstacle data to the communication module to visualise in a screen of the communication module or to further transmit to a mobile device application or vehicles multimedia output screen.

The position of the sensors with respect to the communication module is unaffected by various loads.

The sensors can be attached to the end, front or any side of an object an object, such as a towable trailer, or a vehicle in general, magnets or holders.

This fully wireless system eliminates the need for any connection to the objects electrical circuit while maintaining an extended operating range of over 100 meters (up to two kilometers). The system ensures uninterrupted performance, regardless of load, positioned between the sensors and the communication module, conditions. The ultrasonic sensors provide precise parking assistance and millimeter-wave radar for tracking obstacles in blind spots around the object having the sensors mounted thereon, enhancing both maneuverability and safety.

The system does not require any modifications to the trailer or vehicle. The system operates completely on internal battery power, removing the need for a connection to the trailer's electrical circuit.

The system remains operational across long distances, ensuring uninterrupted assistance for parking and blind spot detection. The system ensures consistent and reliable sensor performance regardless of a trailer load. The combination of ultrasonic sensors for parking assistance and millimeter-wave radar for both, parking assistance and blind spot detection, provides comprehensive coverage, significantly reducing the risk of collisions and accidents during trailer operation.

### BRIEF DESCRIPTION OF THE DRAWINGS

Features of the invention believed to be novel and inventive are set forth with particularity in the appended claims. The invention itself, however, may be best understood by reference to the following detailed description of the invention, which describes exemplary embodiments, given in non-restrictive examples, of the invention, taken in conjunction with the accompanying drawings, in which:

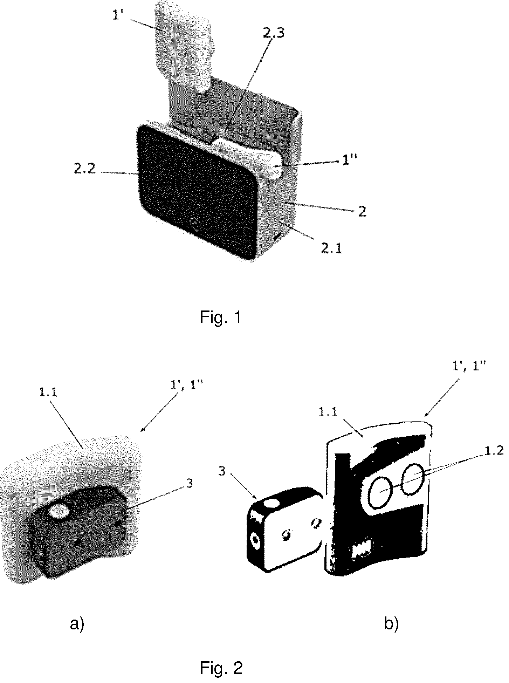

- Fig. 1: shows main components of the system according to the inventio: sensor units and a communication/charging unit.
- Fig. 2: shows a sensor unit: a) attached to a bracket for attaching to a non-metallic vehicle frame part or for extended period of use; b) alongside the bracket.

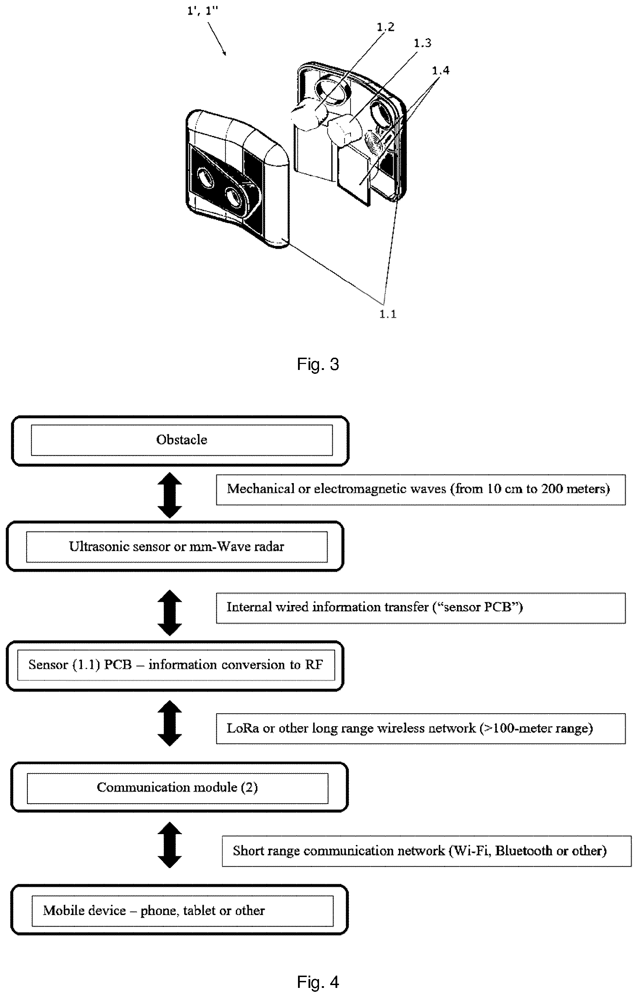

- Fig. 3: shows sensor exploded view discerning some of its internal components.
- Fig. 4: shows a schematic representation of operation principle of the systems according to the invention.

Preferred embodiments of the invention will be described herein below with reference to the drawings. Each figure contains the same numbering for the same or equivalent element.

### DETAILED DESCRIPTION OF THE INVENTION

It should be understood that numerous specific details are presented in order to provide a complete and comprehensible description of the invention embodiment. However, the person skilled in art will understand that the embodiment examples do not limit the application of the invention which can be implemented without these specific instructions. Well-known methods, procedures and components have not been described in detail for the embodiment to avoid misleading. Furthermore, this description should not be considered to be constraining the invention to given embodiment examples but only as one of possible implementations of the invention.

Acronyms of technologies well known in the art:
1. Examples of long-range communication protocol networks (Low-Power Wide-Area Networks (LPWANs):
   i. LoRa - "Long Range", is a physical proprietary radio communication technique. It is based on spread spectrum modulation techniques derived from chirp spread spectrum (CSS) technology.
   ii. NB-loT - narrow band Internet of things.
2. ADAS - Advanced driver-assistance systems - technologies that assist drivers with the safe operation of a vehicle.

Autonomous wireless parking and blind spot assistance system according to the invention comprises at least two universal ultrasonic distance sensors (1', 1") and a communication module (2).

The distance sensors (1', 1") are identical in construction. Each distance sensor comprises a casing body (1.1) hermetically enclosing an ultrasonic sensor (1.3) for parking use for detecting obstacles when parking, and/or a millimetre-wave radar (1.4) for blind spot monitoring while driving and for parking assistance while parking, components (1.5) of long range communication protocol networks, such as LoRa, NB-loT, Zigbee, Thread, Z-Wave, WirelessHART, ISA100.11a, DECT NR+, Mioty, Private LTE, 5G NR, DASH7, Ultra narrowband - Sigfox, Weightless-N or similar, for sending signals to components of long range communication protocol networks (not shown), such as LoRa, NB-loT, Zigbee, Thread, Z-Wave, WirelessHART, ISA100.11a, DECT NR+, Mioty, Private LTE, 5G NR, DASH7, Ultra narrowband - Sigfox, Weightless-N or similar, of the communication module (2), a rechargeable power source (not shown), magnets (1.2) on the outside of the casing body (1.1) for stationary mount.

The communication module (2) comprises components of long range communication protocol networks, such as such as LoRa, NB-IoT, Zigbee, Thread, Z-Wave, WirelessHART, ISA100.11a, DECT NR+, Mioty, Private LTE, 5G NR, DASH7, Ultra narrowband - Sigfox, Weightless-N or similar, for receiving signals from accordingly components of long range communication protocol networks, such as such as LoRa, NB-loT, Zigbee, Thread, Z-Wave, WirelessHART, ISA100.11a, DECT NR+, Mioty, Private LTE, 5G NR, DASH7, Ultra narrowband - Sigfox, Weightless-N or similar of the sensors (1',1"). The communication module (2) further comprises a short-range wireless technology components (not shown) for exchanging data between fixed and mobile devices over short distances. Short-range wireless technologies may be selected from Bluetooth, Wi-Fi, NearLink, near-field communication (NFC), LPWAN, ultra-wideband (UWB) and IEEE 802.15. 4. They are implemented by chips fabricated as RF CMOS integrated circuit (RF circuit). The communication module (2) may further comprise a screen (2.2) such as a LED screen for parking visualization or blind spot visualisation when a mobile computing device is not used. The communication module (2) may be integrated into a vehicles ADAS system or multimedia system via for example said short-range communication protocol (Bluetooth) or a Wi-Fi communication protocol or by a data wire.

In another instance the communication module (2) may further comprise a portable a case (2.1), comprising and enclosing the components of long range communication protocol networks, such as such as LoRa, NB-loT, Zigbee, Thread, Z-Wave, WirelessHART, ISA100.11a, DECT NR+, Mioty, Private LTE, 5G NR, DASH7, Ultra narrowband - Sigfox, Weightless-N or similar, for receiving signals from accordingly components of long range communication protocol networks, such as such as LoRa, NB-loT, Zigbee, Thread, Z-Wave, WirelessHART, ISA100.11a, DECT NR+, Mioty, Private LTE, 5G NR, DASH7, Ultra narrowband - Sigfox, Weightless-N or similar of the sensors (1',1"); the short-range wireless technology components (not shown) for exchanging data between fixed and mobile devices over short distances, a rechargeable power source (not shown) for powering the communication module (2) and charging the sensors (1', 1"); a screen (2.2), such as a LED screen for parking visualization or blind spot visualisation when a mobile computing device is not used, an internal power source. The short-range wireless technologies may be selected from Bluetooth, Wi-Fi, NearLink, near-field communication (NFC), LPWAN, ultra-wideband (UWB) and IEEE 802.15. 4. They are implemented by chips fabricated as RF CMOS integrated circuit (RF circuit). The communication module (2) further comprises a screen (2.2) such as a LED screen for parking visualization or blind spot visualisation when a mobile computing device is not used. The communication module (2) may be integrated into a vehicles ADAS system or multimedia system via for example said short-range communication protocol (Bluetooth) or a Wi-Fi communication protocol or by a data wire.

The communication module (2) may be wirelessly connected with a portable computing device, such as a smart phone, laptop or other mobile computer device comprising at least memory, central processing unit and a power source for visualising distance to parking obstacles or blind spot obstacles

The communication module (2) is configured to generate an audible alert responsive to a signal indicating the sensing of objects, and/or display an image responsive to a signal imaging the rear.

When the system is in use, the sensors (1', 1") are located at attachment points on a towable trailer and the communication module (2) is located inside a vehicle which is towing the towable trailer.

When the system is not in use, the sensors (1', 1") are stored inside the communication module (2) for portability of the entire system and charging of the sensors (1', 1"). Operating distance from the sensors (1', 1") to the communication module (2)) is over 100 meters and up to 2 kilometres. Max sensing distance of the sensors (1', 1") is 5 meters. For mm-wave sensor it differs on technology but can be even hundreds of meters.

Trailer-mounted brackets (3) are optional for mounting the sensors (1', 1") to a non-metallic material or other material for prolonged use.

The mobile computing device app comprises a user for depicting environment around the towable vehicle as sensed by the ultrasonic sensors and millimetre-wave radars.

Components of LoRa, NB-IoT, Zigbee, Thread, Z-Wave, WirelessHART, ISA100.11a, DECT NR+, Mioty, Private LTE, 5G NR, DASH7, Ultra narrowband - Sigfox, Weightless-N in sensors (1', 1") and communication module (2) are such that allow the sensors (1', 1") and communication module (2) to communicate based on the same technology at least for the sensors (1', 1") to send signal's related to detected obstacles to the communication module (2).

Although numerous characteristics and advantages together with structural details and features have been listed in the present description of the invention, the description is provided as an example fulfilment of the invention. Without departing from the principles of the invention, there may be changes in the details, especially in the form, size and layout, in accordance with most widely understood meanings of the concepts and definitions used in claims.

## Claims

1. Autonomous wireless parking and blind spot assistance system comprising at least one sensor unit and a sensor signal receiving unit **characterised in that**
the system sensor unit is at least two distance sensors (1', 1") each comprising a casing body (1.1) hermetically enclosing an ultrasonic sensor (1.3) and/or a millimetre-wave radar (1.4), components (1.5) of long-range communication protocol networks, for wireless communicating with the communication module (2), a rechargeable power source,
the sensor signal receiving unit is a communication module (2) comprising components (1.5) of long-range communication protocol networks for wireless communicating with the sensors (1',1") and components of short-range wireless technology for exchanging data between fixed and/or mobile devices for visualisation of signals of the at least two distance sensors (1', 1").

2. System according to claim 1, where the sensors (1', 1") each comprises a casing body (1.1) further comprising magnets (1.2) on the outside of the casing for stationary mount.

3. System according to claim 1 or 2, where the communication module (2) comprises a case (2.1) enclosing all components of the communication module (2).

4. System according to any one of previous claims, where the communication module (2) further comprises a screen (2.2) for parking visualization when a mobile computing device or vehicle's system is not used.

5. System according to any one of previous claims, where the communication module (2) further comprises a rechargeable power source for powering the communication module and charging the distance sensors (1', 1").

6. System according to any one of previous claims, where the long-range communication protocol networks are selected from LoRa, NB-loT, Zigbee, Thread, Z-Wave, WirelessHART, ISA100.11a, DECT NR+, Mioty, Private LTE, 5G NR, DASH7, Ultra narrowband - Sigfox, Weightless-N.

7. System according to any one of previous claims, where short-range wireless technologies are selected from Bluetooth, Wi-Fi, NearLink, near-field communication (NFC), LPWAN, ultra-wideband (UWB) and IEEE 802.15. 4.

## Amended claims

### Amended claims in accordance with Rule 137(2) EPC.

1. Parking and blind spot assistance autonomous wireless system for a vehicle comprising at least two sensor units for attachment to outside of a vehicle and a sensor signal receiving unit for disposing inside a vehicle, the at least two wireless distance sensors (1', 1") for attachment to outside of a vehicle each comprises a casing body (1.1) hermetically enclosing an ultrasonic sensor (1.3) and/or a millimetre-wave radar (1.4), components (1.5) of long-range communication protocol networks for wireless communicating with the communication module (2), the sensor signal receiving unit is a wireless communication module (2) for disposing inside a vehicle comprises components (1.5) of long-range communication protocol networks for wireless communicating with the sensors (1',1") **characterised in that** the at least two wireless distance sensors (1', 1") comprises a rechargeable power source, and
the sensor signal receiving unit is a wireless communication module (2) for disposing inside a vehicle comprises a portable a case and components of short-range wireless technology for exchanging data between fixed and/or portable computing devices for visualisation of signals of the at least two distance sensors (1', 1"), a screen (2.2), a rechargeable power source for powering the communication module (2) and charging the sensors (1', 1").

2. System according to claim 1, where the sensors (1', 1") each comprises a casing body (1.1) further comprising magnets (1.2) on the outside of the casing for attachment to outside of a vehicle.

3. System according to claim 1 or 2, where the communication module (2) comprises a case (2.1) enclosing all components of the communication module (2).

4. System according to any one of previous claims, where the long-range communication protocol networks are selected from LoRa, NB-loT, Zigbee, Thread, Z-Wave, WirelessHART, ISA100.11a, DECT NR+, Mioty, Private LTE, 5G NR, DASH7, Ultra narrowband - Sigfox, Weightless-N.

5. System according to any one of previous claims, where short-range wireless technologies are selected from Bluetooth, Wi-Fi, NearLink, near-field communication (NFC), LPWAN, ultra-wideband (UWB) and IEEE 802.15. 4.
